# FASCICULE DE BREVET EUROPEEN

(11) **EP 1 874 589 B1**
(45) Date de publication et mention de la délivrance du brevet: **12.07.2017**
(21) Numéro de dépôt: 06764585.3
(22) Date de dépôt: 02.05.2006
(51) Int. Cl.: B60R 19/18

(54) **ENSEMBLE D'UNE PEAU DE PARE-CHOCS ET D'UN ABSORBEUR**
STOSSFÄNGER- UND STOSSFÄNGERHAUTANORDNUNG
ASSEMBLY CONSISTING OF A BUMPER SKIN AND OF A SHOCK ABSORBER

(30) Priorité: 29.04.2005 FR 0504391
(43) Date de publication de la demande: 09.01.2008
(73) Titulaire: Compagnie Plastic Omnium, 69007 Lyon (FR)
(72) Inventeur: ROUSSEL, Thierry, 52500 Fayl la Foret (FR); MONTANVERT, Pierre, 69100 Villeurbane (FR); FAYT, Arnold, 01640 Jujurieux (FR); MALTESTE, Stéphane, 01800 Meximieux (FR)
(74) Mandataire: Remy, Vincent Noel Paul
(86) Numéro de dépôt international: PCT/FR2006/000985
(87) Numéro de publication internationale: WO 2006/117477

(56) Documents cités:
- EP-A- 0 591 031
- WO-A-03/104030
- DE-A1- 10 330 313
- FR-A- 2 762 563
- FR-A- 2 836 434
- US-A- 3 794 997
- US-A- 4 348 042
- US-A- 5 290 079
- US-A- 5 988 713
- US-A1- 2004 080 167
- US-A1- 2004 262 931

## Description

La présente invention concerne un ensemble d'une peau de pare-chocs et d'un absorbeur en U.

### Domaine technique

Dans un pare-chocs de véhicule automobile, on utilise couramment un absorbeur intercalé entre une poutre de chocs et une peau de pare-chocs. La fonction de cet absorbeur est de protéger les piétons en cas de choc en évitant que le piéton ne rencontre une surface dure. En effet, grâce à l'absorbeur, la peau de pare-chocs n'est pas en contact direct avec la poutre de chocs. Ainsi, les déformations de l'absorbeur permettent d'absorber des chocs à faible vitesse avec un piéton.

### Etat de la technique

On connaît dans l'état de la technique un ensemble d'une peau de pare-chocs de véhicule et d'un absorbeur en U en matière thermoplastique, l'absorbeur comprenant un fond et deux parois latérales ayant chacune un bord longitudinal libre et un bord longitudinal opposé lié au fond, les parois latérales et le fond définissant une cavité longitudinale. L'absorbeur est de forme oblongue et le fond et les parois latérales s'étendent longitudinalement à l'absorbeur. Un fois monté sur le véhicule, la direction longitudinale de l'absorbeur est sensiblement orthogonale à la direction de marche du véhicule.

L'absorbeur est fixé, par exemple par encliquetage, à la poutre de chocs en étant orienté de manière que sa concavité est tournée vers la poutre. Souvent, l'absorbeur est fixé à la poutre par ses bords libres. La peau de pare-chocs recouvre l'absorbeur et la poutre de chocs.

On connaît notamment une poutre de chocs comprenant des rainures longitudinales ménagées à sa surface, les rainures étant aptes à accueillir les bords libres des parois latérales. Il est donc nécessaire d'adapter la forme de la poutre pour qu'elle puisse supporter efficacement l'absorbeur.

### Problème posé par cet état de la technique

Les moyens de fixation des bords libres des parois latérales de l'absorbeur à la poutre de chocs doivent être particulièrement solides pour résister aux chocs. Souvent, il faut modifier la structure de la poutre de chocs et lui donner une forme complexe et donc coûteuse à concevoir et à produire. Du fait de ces moyens de fixation complexes, l'opération de montage de l'absorbeur sur la poutre est généralement longue et pénible.

Le document FR 2762563A décrit un ensemble d'une peau de pare-chocs de véhicule et d'un absorbeur en U de pare-chocs, selon le préambule de la revendication 1. L'invention vise à s'affranchir des problèmes précités en fournissant un ensemble d'une peau et d'un absorbeur qui puisse coopérer avec une poutre de chocs de conception et de fabrication simples.

### Solution technique proposée par l'invention

A cet effet, l'invention a pour objet un ensemble d'une peau de pare-chocs de véhicule et d'un absorbeur en U de pare-chocs, l'absorbeur étant réalisé en matière thermoplastique et comprenant un fond et deux parois latérales ayant chacune un bord longitudinal libre et un bord longitudinal opposé lié au fond, les parois latérales et le fond définissant une cavité longitudinale, où l'absorbeur et la peau de pare-chocs sont liés entre eux de manière que la concavité de l'absorbeur est tournée vers la peau de pare-chocs, où l'absorbeur comporte des moyens mécaniques destinés à maintenir sensiblement constante la distance entre les bords libres respectifs des deux parois latérales, et où les moyens mécaniques sont disposés de telle sorte que la cavité longitudinal s'étend entre les moyens mécaniques et le fond. On entend par « cavité » un volume libre formant un corps creux. La cavité longitudinale définie par les parois latérales et le fond constitue donc un corps creux s'étendant sur toute la longueur de la poutre.

### Avantages apportés par l'invention

Grâce à l'invention, il n'est pas nécessaire de doter la poutre de chocs de moyens de fixation de l'absorbeur spécifiques. En effet, l'absorbeur est fixé à la peau de pare-chocs par exemple par encliquetage mais n'est pas fixé à la poutre. Une fois que l'ensemble de la peau et de l'absorbeur est monté sur le véhicule, le fond de l'absorbeur est simplement en appui sur la poutre de chocs. On peut donc utiliser une poutre de chocs classique ou légèrement modifiée de sorte qu'elle présente une surface d'appui destinée à supporter le fond de l'absorbeur. Ainsi, en cas de choc, les efforts subis par la peau de pare-chocs sont transmis à la poutre de chocs par l'intermédiaire de l'absorbeur.

De plus, il est possible de pré-monter l'ensemble de la peau et de l'absorbeur et de monter ensuite cet ensemble sur le véhicule. Le montage de l'ensemble sur le véhicule revient simplement à monter la peau de pare-chocs sur la carrosserie du véhicule, la mise en référence de l'absorbeur par rapport à la poutre de chocs ne nécessitant alors aucune opération spécifique.

En outre, l'absorption des chocs piétons dans cette configuration est tout de même effectuée de façon aussi efficace qu'auparavant. En effet, lors d'un choc, les moyens mécaniques empêchent les extrémités libres des parois latérales de l'absorbeur de s'écarter l'une de l'autre, ce qui aurait pour effet de réduire sa capacité d'absorption de chocs

### Caractéristiques optionnelles

Un ensemble selon l'invention peut en outre comporter l'une ou plusieurs des caractéristiques suivantes.
- Les moyens mécaniques comprennent des ponts de matière venus de moulage avec l'absorbeur.
- L'absorbeur est apte à s'écraser par flambage d'au moins une paroi latérale, sous l'effet d'un choc. Les moyens mécaniques définis ci-dessus favorisent le flambage de la paroi latérale sur toute sa largeur et l'empêchent de fléchir uniquement autour du bord lié au fond. Ainsi, la totalité de la paroi latérale participe à l'absorption des chocs. En cas de choc très violent, les parois flambent totalement de sorte que la peau vient au contact de la poutre de chocs.
- L'absorbeur est conformé pour que lors d'un choc, les parois latérales flambent en s'écartant l'une de l'autre. Il est avantageux que les parois latérales, lors de leur flambage, ne gênent pas l'écrasement de l'absorbeur. En effet, la course d'écrasement de l'absorbeur est directement liée à ses capacités d'absorption des chocs.
- L'absorbeur comprend des moyens de rigidification aptes à limiter, lors d'un choc, l'écrasement de l'absorbeur à une amplitude maximale prédéterminée. Ainsi, on évite que, lors d'un choc violent, la peau entre en contact direct avec la poutre de chocs. En dimensionnant les moyens de rigidification de façon adéquate, on peut définir l'amplitude de la déformation maximale subie par l'absorbeur.
- Les moyens de rigidification sont agencés dans la cavité de façon que l'amplitude maximale prédéterminée est sensiblement la même tout au long de l'absorbeur. Ainsi, lors d'un impact du pare-chocs avec un obstacle, la capacité d'amortissement de l'impact par l'absorbeur est indépendante de la zone d'impact.
- Les moyens de rigidification comprennent un réseau de nervures.
- Le réseau de nervures est venu de moulage avec l'absorbeur.
- Les moyens de rigidification sont disposés dans la cavité longitudinale de l'absorbeur.
- Le fond de l'absorbeur est destiné à s'appuyer sur une surface d'appui d'une poutre de chocs, le fond de l'absorbeur étant conformé de façon à former une surface d'appui complémentaire de celle de la poutre de chocs. Cela permet de rendre maximale la surface de contact entre l'absorbeur et la poutre de chocs.
- Les moyens de rigidification sont au fond de la cavité.
- Le bord lié de la paroi est sensiblement rectiligne et le bord libre de la paroi présente une courbure sensiblement identique à celle de la peau de pare-chocs de sorte que la paroi est plus large en son centre qu'à ses extrémités longitudinales et dans lequel la distance entre les moyens de rigidification et la peau de pare-chocs est la même tout au long de l'absorbeur. Ainsi, il est possible d'adapter un ensemble selon l'invention sur une poutre de chocs standard rectiligne, quelle que soit la courbure de la peau de pare-chocs tout en conservant une capacité d'amortissement des chocs uniforme le long du pare-chocs.
- Les moyens de rigidification sont disposés hors de la cavité longitudinale de l'absorbeur.
- L'absorbeur comprend au moins une bande de matière thermoplastique venue de moulage et destinée à fermer au moins partiellement la cavité longitudinale. La bande peut ainsi avoir une fonction de moyens mécaniques destinés à maintenir sensiblement constante la distance entre les bords libres respectifs des deux parois latérales.
- Les moyens de rigidification sont disposés sur la bande.

L'invention sera mieux comprise à la lecture de la description qui va suivre, donnée uniquement à titre d'exemple et faite en se référant aux figures annexées.

### Brève description des dessins

- La figure 1 est une vue éclatée en perspective d'un ensemble selon l'invention monté sur une poutre de chocs,
- les figures 2a, 2b et 2c sont des schémas en coupe transversale de l'ensemble représenté sur la figure 1 au cours d'un choc,
- la figure 3 est un schéma selon une coupe longitudinale horizontale de l'ensemble représenté sur la figure 1,
- les figures 4a, 4b sont des schémas d'une première variante d'un ensemble selon l'invention,
- la figure 4c est une vue en perspective d'un tronçon coupé du même ensemble,
- les figures 5a et 5b sont des schémas d'une deuxième variante d'un ensemble selon l'invention,
- la figure 6 est un schéma d'une troisième variante d'un ensemble selon l'invention,
- la figure 7 est un schéma d'une quatrième variante d'un ensemble selon l'invention.

### Mode de réalisation principal de l'invention

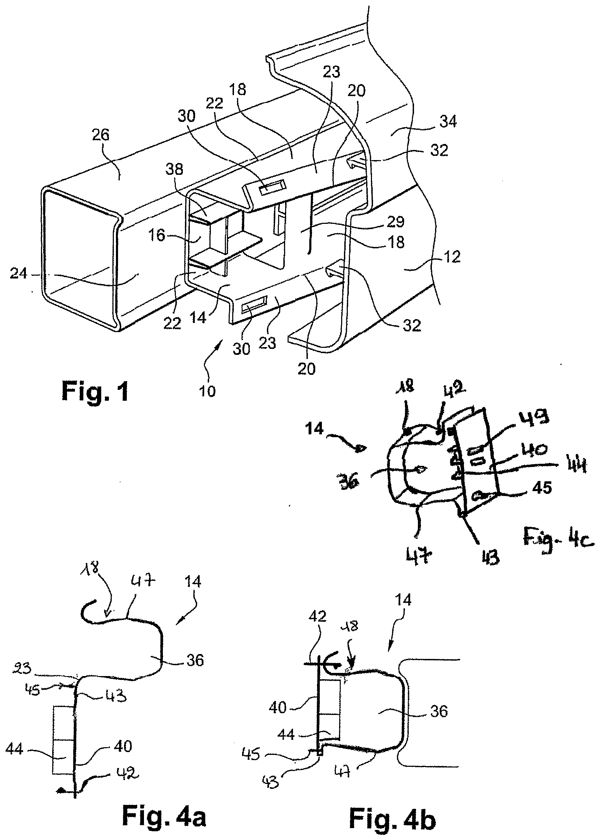

On a représenté sur la figure 1 une vue éclatée d'un ensemble 10 d'une peau 12 de pare-chocs de véhicule et d'un absorbeur 14 en U de pare-chocs. L'absorbeur 14 et la peau 12 sont réalisés en matière thermoplastique.

L'absorbeur 14 est dit « en U » car il présente, en section transversale, une forme sensiblement de U. L'absorbeur 14 comprend un fond 16 et deux parois latérales 18 ayant chacune un bord libre 20 et un bord opposé 22 lié au fond 16. Les bords libres 20 comprennent des retours longitudinaux 23 sensiblement parallèles au fond 16.

L'absorbeur 14 et la peau 12 de pare-chocs sont liés entre eux de manière que la concavité de l'absorbeur est tournée vers la peau 12 et que les retours 23 des bords libres 20 des parois latérales 18 de l'absorbeur s'appuient sur la peau 12 en cas de choc. A cet effet, l'absorbeur 14 est fixé à la peau 12 de pare-chocs par les retours 23 des bords libres 20 des parois latérales 18.

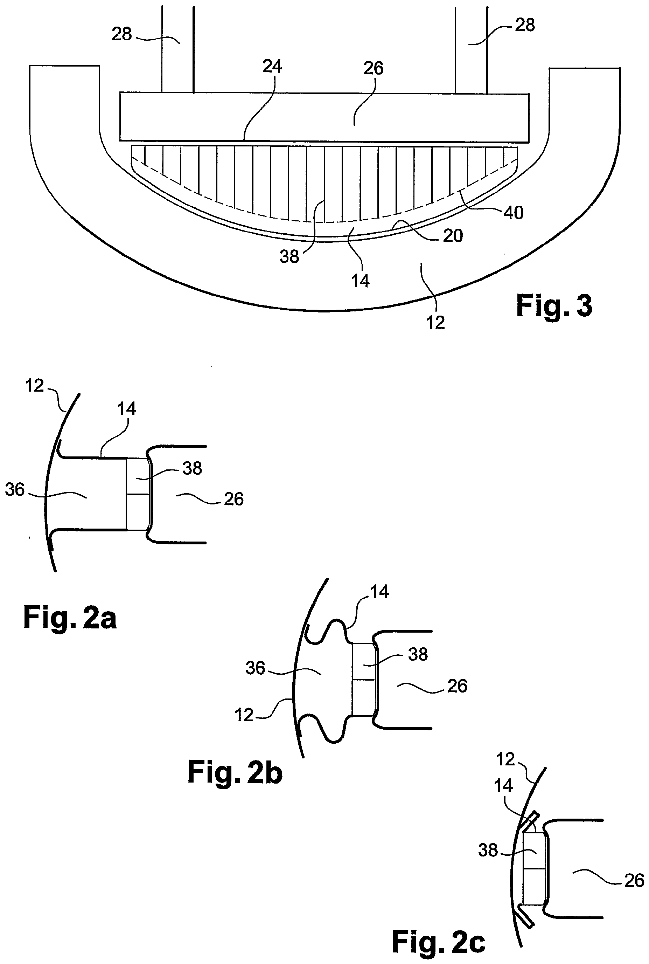

Le fond 16 est en appui sur une surface d'appui 24 d'une poutre 26 de chocs reliée à deux longerons 28 du véhicule, comme représenté sur la figure 3.

La poutre 26 est sensiblement rectiligne et la surface d'appui 24 présente une forme de recentrage visible sur la figure 1.

Le fond 16 de l'absorbeur 14 est conformé de façon à former une surface d'appui complémentaire de la surface d'appui 24 de la poutre 26. Dans l'exemple représenté, le fond 16 est plat et par conséquent les bords liés 22 des parois latérales 18 sont sensiblement rectilignes.

Grâce à la forme de recentrage de la surface d'appui 24 de la poutre 26, le fond 16 de l'absorbeur est guidé verticalement vers le centre de la surface d'appui 24.

Les bords libres 20 des parois latérales 18 présentent une courbure sensiblement identique à celle de la peau 12 de pare-chocs. Ainsi, la paroi 18 est plus large en son centre qu'à ses extrémités longitudinales.

L'absorbeur 14 comporte des moyens mécaniques 29 destinés à maintenir sensiblement constante la distance entre les bords libres 20 respectifs des deux parois latérales 18. Ces moyens mécaniques 29 comprennent des ponts de matière thermoplastique venus de moulage avec l'absorbeur 14.

Les retours 23 des bords libres 20 de l'absorbeur 14 sont munis de lumières 30 destinées à coopérer avec des languettes 32 venues de moulage avec la peau 12. Les lumières 30 et les languettes 32 permettent la fixation de l'absorbeur 14 sur la peau 12 par encliquetage.

De préférence, les languettes 32 sont positionnées en des endroits de la surface interne de la peau 12 dont la surface externe correspondante est masquée, par exemple par un bandeau 34 ou une plaque de police (non-représentée). Cela permet ainsi d'éviter que des retassures dues au moulage ne soient visibles sur la surface externe de la peau 12.

Les parois 18 et le fond 16 définissent une cavité 36 longitudinale au fond de laquelle sont disposés des moyens 38 de rigidification qui comprennent un réseau de nervures 38 venues de moulage avec l'absorbeur. Dans l'exemple représenté, les nervures 38 sont disposées transversalement ou longitudinalement à l'absorbeur 14 mais il est évident que l'on peut également disposer ces nervures selon une seule direction.

Les parois 18 de l'absorbeur sont donc maintenues à une distance constante au niveau des bords liés de celles-ci, à l'aide du fond 16 et éventuellement du réseau de nervures 38, et au niveau des bords libres de ces parois 18, à l'aide des moyens mécaniques 29.

Entre ces deux bords, ces parois 18 comportent, selon leur largeur, c'est-à-dire selon une direction orthogonale à la direction longitudinale définie par l'absorbeur, une portion libre, dans laquelle elle peuvent flamber. Cette portion libre est de dimension suffisamment importante pour permettre l'écrasement des parois 18 par flambage sous l'effet d'un choc.

La cinématique des déformations de l'ensemble 10 au cours d'un choc est représentée sur les figures 2a, 2b et 2c.

La figure 2a représente l'ensemble 10 au repos.

La figure 2b représente l'ensemble 10 au cours d'un choc de faible intensité, par exemple au cours d'un choc avec la jambe d'un piéton. On constate que l'absorbeur 14 est apte à s'écraser par flambage d'au moins une des parois latérales 18, sous l'effet du choc. Le flambage de la paroi s'effectue selon sa largeur, c'est-à-dire selon une direction orthogonale à la direction longitudinale définie par l'absorbeur. En d'autres termes, lorsque l'absorbeur est positionné sur le véhicule, le flambage s'effectue selon la direction de marche du véhicule.

La figure 2c représente l'ensemble 10 au cours d'un choc de forte intensité. On constate que les nervures 38 sont aptes à limiter, lors du choc de forte intensité, l'écrasement de l'absorbeur à une amplitude maximale prédéterminée. En effet, la peau 12 est alors en contact avec les nervures 38. Pour une largeur de la paroi 18 au repos donnée, on peut fixer précisément la valeur de l'amplitude maximale de déformation en agissant sur la hauteur des nervures 38, afin d'obtenir le meilleur compromis entre la course d'écrasement et la capacité d'absorption des chocs.

Comme précisé plus haut, la paroi 18 est plus large en son centre qu'à ses extrémités longitudinales et la capacité d'absorption de l'absorbeur est par conséquent susceptible d'être plus grande en son centre qu'à ses extrémités. Pour que le comportement, lors d'un choc, de l'absorbeur 14 soit uniforme, il est avantageux que les nervures 38 soient agencées dans la cavité 36 de façon que l'amplitude maximale prédéterminée soit sensiblement la même tout au long de l'absorbeur.

Ainsi, comme représenté sur la figure 3, la hauteur d'une nervure 38 est fonction de sa position longitudinale, de sorte que la distance entre le sommet d'une nervure et le bord libre 20 de l'absorbeur 14 soit la même pour toutes les nervures, par exemple égale à 50mm. On rappelle que cette distance correspond à l'amplitude maximale prédéterminée précitée.

La courbe 40 définie par les extrémités des nervures 38 a une courbure sensiblement identique à celle de la peau 12 de pare-chocs.

L'invention ne se limite pas au mode de réalisation qui vient d'être décrit.

### Variantes de l'invention

Selon une variante de l'invention représentée sur les figures 4a, 4b et 4c, l'absorbeur 14 comprend une bande 40 de matière thermoplastique venue de moulage avec l'absorbeur, liée à celui-ci par le retour 23 d'une des parois latérales de l'absorbeur 14, qui forme ainsi une charnière 43.

Comme représenté à la figure 4b, la bande 40 de matière est apte à fermer la cavité 36, par pliage le long de la charnière de liaison 43. La bande 40 se replie donc le long du retour 23, ce qui permet de solidifier la liaison entre la bande 40 et les parois de l'absorbeur 14.

Sur cette figure, on observe également que le retour 23 auquel est accroché la bande 40 comprend un plot 45, destiné à s'engager dans une lumière associée de la bande en matière thermoplastique 40 (non représentée sur la figure).

Ce plot 45 permet de positionner correctement la bande 40 relativement aux parois 18, de rigidifier encore la liaison entre la bande 40 et l'absorbeur 14 et d'éviter le glissement de la bande 40 par rapport aux parois 18, selon la direction longitudinale de l'absorbeur.

La bande 40 est alors maintenue en position fermée par des moyens 42 d'encliquetage prévus sur la bande et sur la paroi 18 de l'absorbeur 14, opposée à la paroi à laquelle est liée la bande 40. Ces moyens d'encliquetage sont par exemple constitués d'une lumière dans la paroi 18 de l'absorbeur et une languette conformée sur la bande 40.

La bande 40 forme des moyens mécaniques destinés à maintenir sensiblement constante la distance entre les bords libres respectifs des deux parois latérales. Dans ce mode de réalisation, les parois 18 de l'absorbeur ne sont pas planes. Elles présentent un changement d'inclinaison 47 dans leur largeur, de sorte que le flambage, notamment par écartement des parois 18 est facilité.

Un réseau de nervures 44 est venu de moulage à la surface de la bande 40 de sorte que lorsque la bande 40 ferme la cavité 36, le réseau de nervure 44 est disposé à l'embouchure de la cavité 36 et constitue des moyens de rigidification aptes à limiter, lors d'un choc, l'écrasement de l'absorbeur à une amplitude maximale prédéterminée.

Bien entendu, pour tenir compte de la courbure des bords libres 20 des parois latérales, il peut être nécessaire de munir l'absorbeur de plusieurs bandes 40 de matière thermoplastique disposées longitudinalement les unes à côté des autres.

Il est également possible de fixer la peau 12 de pare-chocs à cette bande 40 en matière thermoplastique, notamment par encliquetage, en ménageant sur la bande 40 au moins une lumière 49, telle que représentés sur la figure 4c, dans laquelle peut s'encliqueter une languette venue de moulage avec la peau de pare-chocs, notamment ménagée derrière la plaque de police.

La bande 40 laisse une plus grande liberté de choix quant à l'emplacement de la languette sur la peau de pare-chocs, car une plus grande dimension selon la direction Z du véhicule automobile est disponible pour le positionnement de l'orifice associé à cette languette.

Ainsi, il n'est pas obligatoire de revoir la configuration externe de la peau de pare-chocs pour s'affranchir des problèmes de retassure liés à l'ajout d'une languette sur celle-ci. Grâce à ce mode de réalisation, les languettes peuvent être placées derrière les lignes de style déjà existantes.

Il est à noter que la bande 40 peut également se prolonger, notamment dans la région de l'absorbeur qui n'est pas située derrière la plaque de police, de façon à pouvoir être fixée à des endroits du véhicule plus éloignés de l'absorbeur, de façon à pouvoir masquer la fixation de l'absorbeur à la peau.

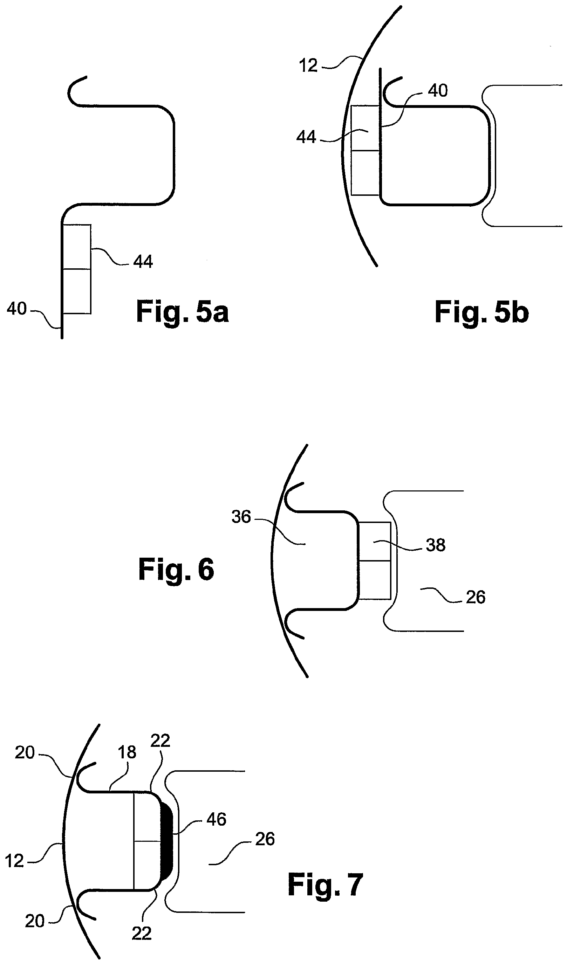

Selon une deuxième variante représentée sur les figures 5a et 5b, la bande 40 liée à une des parois latérales 18 le long de son bord libre 20 qui forme ainsi une charnière. Dans ce mode de réalisation, le réseau de nervures 44 est fixé sur la bande 40 de sorte que lorsque la bande 40 ferme la cavité 36, le réseau de nervures est hors de la cavité. Ainsi, la peau 12 est fixée au réseau de nervures 44.

Dans cette variante, les bords libres et liés de l'absorbeur sont sensiblement rectilignes. Le réseau de nervures comprend une face arrière plane reliée à la bande 40 et une face avant en contact avec la peau de pare-chocs et de courbure longitudinale sensiblement égale à celle de la peau.

Selon une troisième variante représentée à la figure 6, le réseau de nervures 38 est venu de moulage avec le fond 16 de l'absorbeur 14, en dehors de la cavité 36. Le réseau de nervures est donc disposé entre le fond 16 et la poutre de chocs 26.

Dans cette variante, le réseau de nervures comprend une face arrière plane en contact avec la poutre de chocs et une face avant de courbure longitudinale sensiblement égale à celle de la peau. Par conséquent, le fond 16 et les bords libres de l'absorbeur ont également une courbure longitudinale sensiblement égale à celle de la peau.

Selon une quatrième variante représentée sur la figure 7, l'absorbeur 14 est conformé pour que lors d'un choc, les parois latérales flambent en s'écartant l'une de l'autre. A cet effet, le fond 16 de l'absorbeur comprend localement une surépaisseur 46 qui ne s'étend pas jusqu'aux bords liés 22. Ainsi, lorsque l'absorbeur est positionné sur le véhicule, seule la surépaisseur 46 est en contact avec la poutre de chocs 26.

En cas de choc, la peau 12 transmet les efforts aux parois latérales 18 par l'intermédiaire des bords libres 20. Etant donné que les parois latérales ne sont pas en contact direct avec la poutre du fait de la surépaisseur 26, les parois ont alors tendance à s'ouvrir et s'écarter l'une de l'autre.

On peut obtenir également ce résultat en conformant les parois de manière adéquate, par exemple en les dotant d'un décrochement longitudinal ou en les reliant au fond 16 selon un angle légèrement ouvert.

Enfin, bien que dans toutes les variantes décrites l'absorbeur est réalisé d'un seul tenant, il est possible qu'il soit constitué de plusieurs tronçons longitudinaux reliés entre eux, par exemple de deux tronçons de longueurs égales.

## Revendications

1. Ensemble (10) d'une peau (12) de pare-chocs de véhicule et d'un absorbeur (14) en U de pare-chocs, l'absorbeur (14) étant réalisé en matière thermoplastique et comprenant un fond (16) et deux parois latérales (18) ayant chacune un bord longitudinal libre (20) et un bord (22) longitudinal opposé lié au fond (16), les parois latérales (18) et le fond (16) définissant une cavité longitudinale (36) s'étendant essentiellement sur toute la longueur de l'absorbeur, ensemble (10) dans lequel l'absorbeur (14) et la peau (12) de pare-chocs sont liés entre eux de manière que la concavité de l'absorbeur est tournée vers la peau (12) de pare-chocs et en ce que l'absorbeur (14) comporte des moyens mécaniques (29) destinés à maintenir sensiblement constante la distance entre les bords libres (20) respectifs des deux parois latérales (18), **caractérisé en ce que** les moyens mécaniques sont disposés de telle sorte que la cavité longitudinale s'étend entre les moyens mécaniques et le fond.

2. Ensemble (10) selon la revendication 1, dans lequel l'absorbeur (14) est apte à s'écraser par flambage d'au moins une paroi latérale (18), sous l'effet d'un choc.

3. Ensemble (10) selon la revendication 2, dans lequel l'absorbeur (14) est conformé pour que lors d'un choc, les parois latérales flambent en s'écartant l'une de l'autre.

4. Ensemble (10) selon l'une quelconque des revendications 2 et 3, dans lequel l'absorbeur comprend des moyens de rigidification (38) aptes à limiter, lors d'un choc, l'écrasement de l'absorbeur (14) à une amplitude maximale prédéterminée.

5. Ensemble (10) selon la revendication 4, dans lequel les moyens de rigidification (38) sont agencés de façon que l'amplitude maximale prédéterminée est sensiblement la même tout au long de l'absorbeur (14).

6. Ensemble (10) selon la revendication 4 ou 5, dans lequel les moyens de rigidification (38) comprennent un réseau de nervures.

7. Ensemble (10) selon la revendication 6, dans lequel le réseau de nervures (38) est venu de moulage avec l'absorbeur (14).

8. Ensemble (10) selon l'une quelconque des revendications 4 à 7, dans lequel les moyens de rigidification (38) sont disposés dans la cavité longitudinale (36) de l'absorbeur (14).

9. Ensemble (10) selon la revendication 8, dans lequel le fond (16) de l'absorbeur (14) est destiné à s'appuyer sur une surface d'appui (24) d'une poutre de chocs (26), le fond (16) de l'absorbeur (14) étant conformé de façon à former une surface d'appui complémentaire de celle de la poutre de chocs (26).

10. Ensemble (10) selon la revendication 8 ou 9, dans lequel les moyens de rigidification (38) sont au fond de la cavité (36).

11. Ensemble (10) selon les revendications 5 et 10, dans lequel le bord lié (22) de la paroi (18) est sensiblement rectiligne et le bord libre (20) de la paroi (18) présente une courbure sensiblement identique à celle de la peau (12) de pare-chocs de sorte que la paroi (18) est plus large en son centre qu'à ses extrémités longitudinales et dans lequel la distance entre les moyens de rigidification (38) et la peau (12) de pare-chocs est la même tout au long de l'absorbeur (14).

12. Ensemble (10) selon l'une quelconque des revendications 4 à 7, dans lequel les moyens de rigidification (38) sont disposés hors de la cavité longitudinale (36) de l'absorbeur (14).

13. Ensemble (10) selon l'une quelconque des revendications précédentes, dans lequel les moyens mécaniques comprennent au moins un pont de matière (29) venu de moulage avec l'absorbeur.

14. Ensemble (10) selon l'une quelconque des revendications 1 à 12, dans lequel l'absorbeur (14) comprend au moins un bande (40) de matière thermoplastique venue de moulage et destinée à fermer au moins partiellement la cavité longitudinale (36).

15. Ensemble (10) selon l'une quelconque des revendications 5 à 12 prise nécessairement avec la revendication 14, dans laquelle les moyens de rigidification sont disposés sur la bande (40).

## Patentansprüche

1. Anordnung (10) aus einer Stoßfängerhaut (12) für ein Fahrzeug und einem U-förmigen Stoßfänger (14), wobei der Stoßfänger (14) aus thermoplastischem Material ausgeführt ist und einen Boden (16) und zwei Seitenwände (18) umfasst, die jede einen freien Längsrand (20) und einen mit dem Boden (16) verbundenen entgegengesetzten Längsrand (22) haben, wobei die Seitenwände (18) und der Boden (16) einen Längshohlraum (36) festlegen, der sich im Wesentlichen über die gesamte Länge des Stoßfängers erstreckt, Anordnung,(10), wobei der Stoßfänger (14) und die Stoßfängerhaut (12) miteinander in der Form verbunden sind, dass die Konkavität des Stoßfängers der Stoßfängerhaut (12) zugewandt ist, und wobei der Stoßfänger (14) mechanische Mittel (29) aufweist, die dazu bestimmt sind, den Abstand zwischen den jeweiligen freien Rändern (20) der zwei Seitenwände (18) im Wesentlichen konstant zu halten, **dadurch gekennzeichnet, dass** die mechanischen Mittel so angeordnet sind, dass der Längshohlraum sich zwischen den mechanischen Mitteln und dem Boden erstreckt.

2. Anordnung (10) nach Anspruch 1, wobei der Stoßfänger (14) durch Ausknicken mindestens einer Seitenwand (18) unter der Einwirkung eines Aufpralls quetschbar ist.

3. Anordnung (10) nach Anspruch 2, wobei der Stoßfänger (14) so ausgebildet ist, dass die Seitenwände bei einem Aufprall ausknicken, indem sie sich aueinanderspreizen.

4. Anordnung (10) nach einem der Ansprüche 2 und 3, wobei der Stoßfänger (14) Versteifungsmittel (38) umfasst, die dazu eingerichtet sind, bei einem Aufprall die Quetschung des Stoßfängers (14) auf eine vorbestimmte maximale Weite zu begrenzen.

5. Anordnung (10) nach Anspruch 4, wobei die Versteifungsmittel (38) so vorgesehen sind, dass die vorbestimmte maximale Weite über die gesamte Länge des Stoßfängers (14) im Wesentlichen gleich ist.

6. Anordnung (10) nach Anspruch 4 oder 5, wobei, die Versteifungsmittel (38) ein Rippennetz umfassen.

7. Anordnung (10) nach Anspruch 6, wobei das Rippennetz (38) an den Stoßfänger (14) angeformt ist.

8. Anordnung (10) nach einem der Ansprüche 4 bis 7, wobei die Versteifungsmittel (38) in dem Längshohlraum (36) des Stoßfängers (14) angeordnet sind.

9. Anordnung (10) nach Anspruch 8, wobei der Boden (16) des Stoßfängers (14) dazu bestimmt ist, sich auf einer Abstützfläche (24) eines Aufprallträgers (26) abzustützen, wobei der Boden (16) des Stoßfängers (14) so ausgebildet ist, dass er eine zusätzliche Abstützfläche zu der des Aufprallträgers (26) bildet.

10. Anordnung (10) nach Anspruch 8 oder 9, wobei die Versteifungsmittel (38) am Boden des Hohlraums (36) sind.

11. Anordnung (10) nach Anspruch 5 und 10, wobei der verbundene Boden (22) der Wand (18) im Wesentlichen gerade ist und der freie Rand (20) der Wand (18) eine Krümmung aufweist, die im Wesentlichen identisch mit der der Stoßfängerhaut (12) ist, so dass die Wand (18) in ihrer Mitte breiter ist als an ihren Längsenden, und wobei der Abstand zwischen den Versteifungsmitteln (38) und der Stoßfängerhaut (12) über die gesamte Länge des Stoßfängers (14) gleich ist.

12. Anordnung (10) nach einem der Ansprüche 4 bis 7, wobei die Versteifungsmittel (38) außerhalb des Längshohlraums (36) des Stoßfängers (14) angeordnet sind.

13. Anordnung (10) nach einem der vorhergehenden Ansprüche, wobei die mechanischen Mittel mindestens eine Materialbrücke (29) umfassen, die an den Stoßfänger (14) angeformt ist.

14. Anordnung (10) nach einem der Ansprüche 1 bis 12, wobei der Stoßfänger (14) mindestens einen Streifen (40) aus thermoplastischem Material umfasst, der angeformt und dazu bestimmt ist, den Längshohlraum (36) mindestens teilweise zu schließen.

15. Anordnung (10) nach einem der Ansprüche 5 bis 12, notwendigerweise zusammen mit Anspruch 14, wobei die Versteifungsmittel auf dem Streifen (40) angeordnet sind.

## Claims

1. An assembly (10) of a vehicle bumper skin (12) and a channel-section bumper absorber (14), the absorber (14) being made of thermoplastic material and comprising a web (16) and two flanges (18) each having a free longitudinal edge (20) and an opposite longitudinal edge (22) that is connected to the web (16), the flanges (18) and the web (16) defining a longitudinal channel (36), extending essentially along the entire length of the absorber (14), assembly (10) wherein the bumper skin (12) and absorber (14) are interconnected so that the concave side of the absorber faces towards the bumper skin (12), and wherein the absorber (14) includes mechanical means (29) for keeping the distance between the respective free edges (20) of the two flanges (18) substantially constant, **characterized in that the** mechanical means (29)are arranged so that the longitudinal channel (36) extends between the mechanical means (29) and the web (16).

2. An assembly (10) according to claim 1, in which the absorber (14) is suitable for flattening by at least one of its flanges (18) buckling under the effect of an impact.

3. An assembly (10) according to claim 2, in which the absorber (14) is shaped so that in the event of an impact, the flanges buckle by splaying apart from each other.

4. An assembly (10) according to claim 2 or claim 3, in which the absorber includes stiffener means (38) suitable, in the event of an impact, for ensuring that the extent to which the absorber (14) can flatten is limited to a predetermined maximum amplitude.

5. An assembly (10) according to claim 4, in which the stiffener means (38) are arranged in such a manner that the predetermined maximum amplitude is substantially the same over the entire length of the absorber (14).

6. An assembly (10) according to claim 4 or claim 5, in which the stiffener means (38) comprise an array of ribs.

7. An assembly (10) according to claim 6, in which the array of ribs (38) is integrally molded with the absorber (14).

8. An assembly (10) according to any one of claims 4 to 7, in which the stiffener means (38) are disposed in the longitudinal channel (36) of the absorber (14).

9. An assembly (10) according to claim 8, in which the web (16) of the absorber (14) is designed to bear against a bearing surface (24) of an impact beam (26), the web (16) of the absorber (14) being shaped so as to form a bearing surface complementary to the bearing surface of the impact beam (26).

10. An assembly (10) according to claim 8 or claim 9, in which the stiffener means (38) are located on the web of the channel (36).

11. An assembly (10) according to claims 5 and 10, in which the connected edge (22) of each flange (18) is substantially rectilinear and the free edge (20) of each flange (18) presents curvature substantially identical to the curvature of the bumper skin (12) such that each flange (18) is wider in its middle than at its longitudinal ends, and in which the distance between the stiffener means (38) and the bumper skin (12) is the same all along the absorber (14).

12. An assembly (10) according to any one of claims 4 to 7, in which the stiffener means (38) are disposed outside the longitudinal channel (36) of the absorber (14).

13. An assembly (10) according to any preceding claim, in which the mechanical means comprise at least one bridge of material (29) integrally molded with the absorber.

14. An assembly (10) according to any one of claims 1 to 12, in which the absorber (14) includes at least one strip (40) of thermoplastic material integrally molded therewith and designed to close the longitudinal channel (36) at least in part.

15. An assembly (10) according to any one of claims 5 to 12 taken necessarily in conjunction with claim 14, in which the stiffener means are disposed on the strip (40).
